(19) **Europäisches Patentamt**
**European Patent Office**
**Office européen des brevets**

(11) **EP 3 974 651 B1**

(12) **EUROPEAN PATENT SPECIFICATION**

(45) Date of publication and mention
of the grant of the patent:
**13.11.2024 Bulletin 2024/46**

(21) Application number: **21192139.0**

(22) Date of filing: **19.08.2021**

(51) International Patent Classification (IPC):
*F04C 2/08* (2006.01) *F04C 11/00* (2006.01)
*F04C 14/06* (2006.01) *F04B 49/06* (2006.01)
*F16H 61/42* (2010.01) *F16H 61/444* (2010.01)
*F16H 61/448* (2010.01) *F04B 49/00* (2006.01)

(52) Cooperative Patent Classification (CPC):
**F04C 2/084; F04B 49/002; F04B 49/065;**
**F04B 49/08; F04C 11/003; F04C 14/065;**
**F16H 61/435; F16H 61/444; F16H 61/448;**
F04B 1/295; F04B 1/324; F04B 2201/1201;
F04B 2205/05; F04C 2270/18; F04C 2270/20

(54) **MULTI-GEAR PUMP WITH AUTOMATIC GEAR CONTROL FUNCTION**

MEHRGANGPUMPE MIT AUTOMATISCHER GETRIEBESTEUERUNGSFUNKTION

POMPE À ENGRENAGES MULTIPLES AVEC FONCTION DE COMMANDE AUTOMATIQUE D'ENGRENAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **23.09.2020 CN 202011007883**

(43) Date of publication of application:
**30.03.2022 Bulletin 2022/13**

(73) Proprietor: **Bosch Rexroth (Changzhou) Co., Ltd.**
**Changzhou, Jiangsu 213161 (CN)**

(72) Inventors:
• **Liebler, Gerold**
**Juangsu, 213164 (CN)**

• **ZHANG, Yonghai**
**Juangsu, 213164 (CN)**
• **ZHANG, Xiaoming**
**Juangsu, 213164 (CN)**

(74) Representative: **Bee, Joachim**
**Robert Bosch GmbH**
**C/IPA**
**P.O. Box 30 02 20**
**70442 Stuttgart (DE)**

(56) References cited:
**EP-A1- 3 663 580      DE-A1- 102008 019 501**
**DE-A1- 102012 009 136      DE-A1- 102014 001 981**

## Description

Technical Field

The present application relates to a multi-gear pump, which has an improved gear control function.

Background Art

A multi-gear (multi-point) pump has a plurality of gears of displacement that can be switched. During practical operation, the gear of the pump needs to be switched according to the actual pump pressure and rotational speed, such that the pump is operated in an appropriate gear, thereby improving the pressure control level and the energy-saving level of a system.

In the prior art, a programmable controller (PLC) is usually used to control a multi-gear pump, in which a switching signal is input to the multi-gear pump by means of the PLC so as to control the gears of the multi-gear pump.

However, users of multi-gear pumps are, after all, not as familiar with pumps as designers of the multi-gear pumps. It is not easy for users to design, in the PLC, a control program that controls the gears of the multi-gear pump according to actual working conditions, and many users are reluctant to carry out extra control programming in the PLC.

Therefore, it is desirable for manufacturers of multi-gear pumps to improve the intrinsic control system of pumps, so as to reduce the extra programming effort by users.

EP 3 663 580 A1 discloses a hydraulic drive apparatus including an electric motor, a variable displacement pump driven by the electric motor, the pump including a pair of pump ports whose delivery side and suction side are switched with each other in accordance with a rotation direction of the electric motor, a hydraulic actuator connected to the pair of pump ports by a first supply/discharge line and a second supply/discharge line. The hydraulic drive apparatus further includes a control device that controls the electric motor based on an actuator position command value for the hydraulic actuator. The pump is configured such that a volume of the pump decreases in accordance with increase in a pressure difference between the first supply/discharge line and the second supply/discharge line.

A further method for controlling a fluid pump is described in DE 10 2012 009 136 A1.

Summary of the Invention

An object of the present application is to provide a multi-gear pump, which makes it possible to add an automatic gear control function to an intrinsic control system of the pump.

In order to achieve this object, the present application provides a multi-gear pump in accordance with claim 1.

In an aspect, the invention provides a multi-gear pump (one specific form of which is a dual-gear pump) having a plurality of gears, including at least a high gear and a low gear, with the multi-gear pump comprising a gear control module, wherein the gear control module is integrated in a control board or a frequency converter of a driving motor of the multi-gear pump, and is configured to switch the gear of the multi-gear pump from the high gear to the low gear when a low-gear condition is satisfied within one control period, and to switch the gear of the multi-gear pump from the low gear to the high gear when a high-gear condition is satisfied within one control period,

wherein the low-gear condition comprises a low-gear working condition A1, and the low-gear working condition A1 is defined as:

the difference between a set output pressure and a real output pressure of the pump being less than a set first pressure difference threshold; and
a real rotational speed of the pump being below a set pump speed limit; and
the real output pressure of the pump being above a set first pressure limit; and
the high-gear condition comprises a high-gear working condition A2 corresponding to the low-gear working condition A1, and the high-gear working condition A2 is defined as:

the low-gear working condition A1 in the previous period being satisfied, and the low-gear working condition A1 in the current period being not satisfied; and
the difference between a set output pressure and a real output pressure of the pump being greater than a set second pressure difference threshold, wherein the second pressure difference threshold is greater than the first pressure difference threshold; or, the real output pressure of the pump being below a first selected pressure value, wherein the first selected pressure value is lower than the first pressure limit.

According to an embodiment, the first selected pressure value is equal to the first pressure limit minus a set pressure value; or, the first selected pressure value is a user-set value.

According to an embodiment, the low-gear condition further comprises a low-gear working condition B1 parallel to the low-gear working condition A1, and the low-gear working condition B1 is defined as:

the real output pressure of the pump being above a set second pressure limit, and the set output pressure of the pump being above a set third pressure limit; and
the high-gear condition further comprises a high-gear working condition B2 corresponding to the low-gear working condition B1, and the high-gear working condition B2 is defined as:

the low-gear working condition B1 in the previous period being satisfied, and the low-gear working condition B1 in the current period being not satisfied; and
the real output pressure of the pump being below a second selected pressure value, wherein the second selected pressure value is lower than the second pressure limit; or, the set output pressure of the pump being below a third selected pressure value, wherein the third selected pressure value is lower than the third pressure limit.

According to an embodiment, the second selected pressure value is equal to the second pressure limit minus a set pressure value; or, the second selected pressure value is a user-set value; and the third selected pressure value is equal to the third pressure limit minus a set pressure value; or, the third selected pressure value is a user-set value.

According to an embodiment, the low-gear condition further comprises a low-gear working condition C1 parallel to the low-gear working conditions A1 and B1, and the low-gear working condition C1 is defined as:

a set output flow of the pump being less than a set output flow limit; and
the high-gear condition further comprises a high-gear working condition C2 corresponding to the low-gear working condition C1, and the high-gear working condition C2 is defined as:

the low-gear working condition C1 in the previous period being satisfied, and the low-gear working condition C1 in the current period being not satisfied; and
the set output flow of the pump being greater than a selected flow value, wherein the selected flow value is less than the output flow limit.

According to an embodiment, the selected flow value is equal to the output flow limit minus a set flow value; or, the selected flow value is a user-set value.

According to an embodiment, the gear control module is configured to switch the gear of the multi-gear pump from the high gear to the low gear when any one of the low-gear working conditions A1, B1 and C1 is satisfied, and to switch the gear of the multi-gear pump from the low gear to the high gear when any one of the high-gear working conditions A2, B2 and C2 is satisfied.

According to an embodiment, the gear control module is configured to further determine, when one of the high-gear working conditions A2, B2 and C2 is satisfied, whether the gear is previously switched to the low gear due to the corresponding low-gear working condition A1, B1 or C1 being satisfied; and if the gear is previously switched to the low gear due to the corresponding low-gear working condition A1, B1 or C1 being satisfied, the gear control module allows the gear to be switched to the high gear, and if the gear is previously switched to the low gear in an instance which is not due to the corresponding low-gear working condition A1, B1 or C1 being satisfied, the gear control module does not allow the gear to be switched to the high gear.

According to an embodiment, the multi-gear pump further comprises a user signal interface, wherein the gear control module is configured to receive a signal input by a user through the user signal interface, and the signal input by the user comprises a low-gear forcing signal; and the gear control module is configured to: based on the received low-gear forcing signal, switch the gear of the multi-gear pump from the high gear to the low gear, regardless of whether the low-gear condition is satisfied.

According to an embodiment, the signal input by the user further comprises a low-gear prohibition signal, and the low-gear prohibition signal does not coexist with the low-gear forcing signal; and the gear control module is configured to: based on the received low-gear prohibition signal, prohibit switching the gear of the multi-gear pump from the high gear to the low gear, regardless of whether the low-gear condition is satisfied.

According to an embodiment, the signal input by the user comprises a high-gear forcing signal; and the gear control module is configured to: based on the received high-gear forcing signal, switch the gear of the multi-gear pump from the low gear to the high gear, regardless of whether the high-gear condition is satisfied.

According to an embodiment, the signal input by the user further comprises a high-gear prohibition signal, and the high-gear prohibition signal does not coexist with the high-gear forcing signal; and the gear control module is configured to: based on the received high-gear prohibition signal, prohibit switching the gear of the multi-gear pump from the low gear to the high gear, regardless of whether the high-gear condition is satisfied.

According to an embodiment, the low-gear forcing signal is also used as the high-gear prohibition signal, and the high-gear forcing signal is also used as the low-gear prohibition signal.

The gear control algorithm is added to the intrinsic control system of the multi-gear pump of the present application, which makes it possible to adapt to various variable-speed/variable-displacement applications, and makes it unnecessary for the end user to carry out extra programming therefor. In addition, the end user can influence the control result by actively inputting a signal as desired. The gear control algorithm is integrated in the driving system of the multi-gear pump, which makes it even possible for the end user to omit the PLC, thereby saving wiring. Therefore, the solution provided in the present application can save the time and costs for users.

Brief Description of the Drawings

The present application can be further understood upon reading the following detailed description with reference to the accompanying drawings, in which:

Fig. 1 is a schematic diagram of a dual-gear pump according to the present application;
Fig. 2 is a flowchart of an exemplary gear control algorithm that can be used in the dual-gear pump of the present application;
Fig. 3 is a graph illustrating the displacement of a dual-gear pump without a gear control algorithm;
Fig. 4 is a graph illustrating the displacement of a dual-gear pump solely relying on a physical working condition for gear switching; and
Fig. 5 is a graph illustrating the displacement of a dual-gear pump with the use of a gear control algorithm according to the present application.

Detailed Description of Embodiments

The present application generally relates to a multi-gear (multi-point) pump. The multi-gear pump has a plurality of switchable gears, and each gear is realized by an internal gear-switching structure of the multi-gear pump. For example, for a plunger-type multi-gear pump, each gear is realized by different slopes of a dosing head (a swash plate). Once the dosing head is set at a certain slope, the gear of the pump is determined, and the pump displacement (the output fluid volume of the pump with one revolution of rotation of a pump rotor) corresponding to the gear is determined.

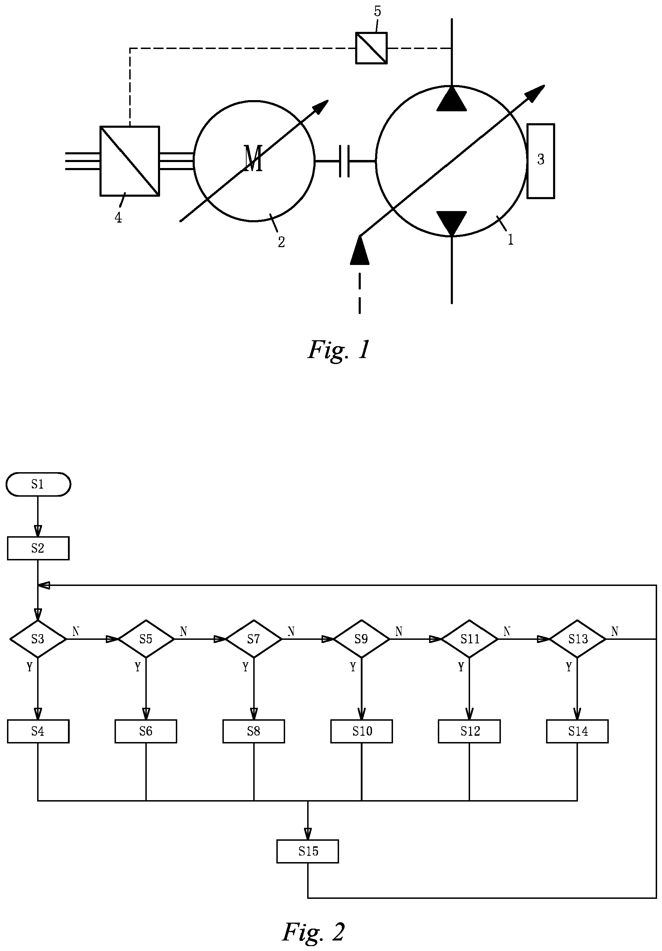

The multi-gear pump is substantially as shown schematically in Fig. 1, and it can transport a liquid medium by the displacement in a plurality of gears. The multi-gear pump comprises a pump part 1 and a driving system for driving the pump part 1. The driving system comprises a motor 2, a control board 3 and a frequency converter 4. The control board 3 and the frequency converter 4 control the running of the motor 2. The control board 3 further controls the operation (such as gear switching) of the pump part 1. In addition, a sensor 5, for example, a pressure sensor, is connected to the output of the pump part 1, and a signal from the sensor can be obtained by the frequency converter 4, so as to realize the control of the pump part 1 by the frequency converter 4.

The present application proposes adding a gear control module to the control board 3 or the frequency converter 4, in order to keep an end user from making extra efforts in programming (such as in an external PLC) gear switching of the multi-gear pump. The gear control module is embedded in the control board 3 or the frequency converter 4. The control board 3 and the frequency converter 4 are hardware built in the driving system of the pump, and therefore, wiring can be saved, and even an external PLC can be omitted.

The gear control module is configured to switch the gear of the pump according to system state variables, and can influence the control result on the basis of the active input signal of the user at any time, and can even select the input signal of the user as the only criterion. The multi-gear pump of the present application is provided with a user signal interface (in the form of hardware or software), and the user can independently choose to input/set time or frequency delay parameters by means of a digital/analog/bus communication/Bluetooth, so as to realize the input of a control signal.

The gear control module of the multi-gear pump is implemented by a PID circuit and algorithm inside the drive system. After the gear of the pump is switched, PID parameters can be appropriately adjusted according to the new gear (displacement) to achieve a better control effect.

The system state variables on which the gear control module is based may comprise: a pump output pressure set value, a real value, and the real difference between the two; a pump rotational speed set value, a real value, and the real difference between the two; feedback of the current pump displacement state; the speed at which the gear switching is executed; a switching instruction signal delay; and so on.

One form of the multi-gear pump is a dual-gear (dual-point) pump, which has two gears, namely, a high gear and a low gear. Some feasible embodiments of the present application are described below by taking the dual-gear pump as an example. It can be understood that the principles and features of the present application are also applicable to multi-gear pumps with other numbers of gears.

The gear control module is configured to execute the gear control algorithm of the present application, wherein an initial gear after start of the dual-gear pump is preferably set to be in the high gear, and conditions are detected in each period, and the gear is allowed to switch from the high gear to the low gear in this period if a low-gear condition is satisfied. Of course, the gear control module may also be configured to set the initial gear after start of the pump to be in the low gear.

The low-gear condition applicable to the dual-gear pump to implement gear switching comprises working conditions A1, B1, and C1 as examples.

The condition A1 is defined as:

$$|\Delta P| < \Delta P\_threshold1;$$

and

$$N\_real < Nk;$$

and

$$P\_real > P\_lim1.$$

$\Delta P$ is the difference between a set output pressure P_cmd of the pump and a detected real output pressure P_real of the pump, and

$\Delta P$_threshold1 is a set first pressure difference threshold;

N_real is a detected real rotational speed of the pump;

Nk is a pump speed limit and is user adjustable; and

P_lim1 is a set first pressure limit.

The condition B1 is defined as:

$$P\_real > P\_lim2;$$

and

$$P\_cmd > P\_lim3.$$

P_lim2 is a set second pressure limit, and P_lim3 is a set third pressure limit.

The condition C1 is defined as:

$$Q\_cmd < Q\_cmd\_lim.$$

Q_cmd is a set output flow of the pump, and Q_cmd_lim is a set output flow limit.

The conditions A1, B1 and C1 are three conditions parallel to each other. When any one of the three conditions is satisfied, it means that the low-gear condition is met. P_lim1, P_lim2 and P_lim3 are all set values, and there is no specific magnitude relationship among the three.

Other low-gear conditions can also be set according to specific working processes.

For different working conditions, for example, different working procedures in a working process (which have different requirements for the output pressure and displacement of the pump), various parameters, which can be set, in the conditions A1, B1, C1... can be specifically set to meet the requirements of specific working conditions. In addition, for a certain procedure, one or more of the conditions A1, B1, C1... can be selected as the low-gear condition.

According to an embodiment, in a certain period, if any one or more of the working conditions A1, B1, C1... is satisfied, the gear control module can control the gear of the dual-gear pump to switch from the high gear to the low gear.

According to another embodiment, in addition to the solution of determining to perform down-shifting on the basis of the above working conditions, the gear control module can also perform forced down-shifting on the basis of user input signals DIA1, DIB1, DIC1... (regardless of whether the working conditions A1, B1, C1...are satisfied). In a certain period, if a certain user input signal DIA1, DIB1, DIC1... is received, the gear control module can control the gear of the dual-gear pump to switch from the high gear to the low gear. In this embodiment, the user input signals DIA1, DIB1, DIC1... are used as low-gear forcing signals.

In addition, according to still another embodiment, the gear control module may also determine whether to perform down-shifting according to a combination of the working conditions A1, B1, C1... and user input signals DIA1', DIB1', DIC1'.... In this embodiment, the user input signals DIA1', DIB1', DIC1'... are used as low-gear prohibition signals. Specifically, in a certain period, even if a certain working condition A1, B1, C1... is satisfied, the gear control module executes no down-shifting operation because there are corresponding user input signals DIA1', DIB1', DIC1'...; and the gear control module can execute a down-shifting operation only if there are no user input signals DIA1', DIB1', DIC1'....

The user input signals DIA1 (DIA1'), DIB1 (DIB1'), DIC1 (DIC1')... are control signals respectively corresponding to conditions A1, B1, C1..., and can be input by means of respective user signal interfaces. The low-gear prohibition signals DIA1', DIB1', DIC1'... are respectively inverse to the low-gear forcing signals DIA1, DIB1, DIC1..., and each low-gear prohibition signal and the corresponding low-gear forcing signal can be input by means of the same interface, but not at the same time, which avoids the misoperation by a user.

Further, the gear control module is configured to allow the gear to switch from the low gear to the high gear in a period if a high-gear condition is satisfied in this period.

The high-gear condition applicable to the gear switching of the dual-gear pump comprises working conditions A2, B2, and C2 as examples.

The condition A2 is defined as:

the condition A1 in the previous period being satisfied and the condition A1 in the current period being not satisfied, and there being no corresponding low-gear forcing signal DIA1; and

$|\Delta P| > \Delta P$_threshold2 or P_real < X1.

$\Delta P$_threshold2 is a set second pressure difference threshold, and $\Delta P$_threshold2 > $\Delta P$_threshold1.

X1 can be referred to as a first selected pressure value, and X1 = P_lim1-P1, where P1 is a set pressure value;

or, X1 = P_min1, where P_min1 is a value that can be set by a user, and P_lim1-P1 < P_min1 < P_lim1.

The condition B2 is defined as:

the condition B1 in the previous period being satisfied and the condition B1 in the current period being not satisfied, and there being no corresponding low-gear forcing signal DIB1; and P_real < X2 or P_cmd < X3.

X2 can be referred to as a second selected pressure value, and X2 = P_lim2-P2, where P2 is a set pressure value;

or, X2 = P_min2, where P_min2 is a value that can be set by a user, and P_lim2-P2 < P_min2 < P_lim2. X3 can be referred to as a third selected pressure value, and X3 = P_lim3-P3, where P3 is a set pressure value;

or, X3 = P_min3, where P_min3 is a value that can be set by a user, and P_lim3-P3 < P_min3 < P_lim3.

The condition C2 is defined as:

the condition C1 in the previous period being satisfied and the condition C1 in the current period being not satisfied, and there being no corresponding low-gear forcing signal DIC1; and

Q_cmd > X4.

X4 can be referred to as a selected flow value, and X4 = Q_cmd_lim-Q0, where Q0 is a set flow value;

or, X4 = Q_min, where Q_min is a value that can be set by a user, and Q_cmd_lim-Q0 < Q_min < Q_cmd_lim.

Other high-gear conditions can also be set according to specific working processes.

For different working conditions, for example, different working procedures in a working process (which have different requirements for the output pressure and displacement of the pump), various parameters, which can be set, in the conditions A2, B2, C2... can be specifically set to meet the requirements of specific working conditions. In addition, for a certain procedure, one or more of the conditions A2, B2, C2... (which corresponds to the selected low-gear working conditions A1, B1, C1...) can be selected as the low-gear condition.

In a certain period, if at least one of the working conditions A2, B2, C2... is satisfied, the gear control module switches the gear of the pump from the low gear to the high gear.

In addition to the solution of determining to perform up-shifting on the basis of the above working conditions, the gear control module can also perform forced up-shifting on the basis of user input signals DIA2, DIB2, DIC2... (regardless of whether the working conditions A2, B2, C2...are satisfied). In a certain period, if a certain user input signal DIA2, DIB2, DIC2... is received, the gear control module can control the gear of the dual-gear pump to switch from the low gear to the high gear. In this embodiment, the user input signals DIA2, DIB2, DIC2... are used as high-gear forcing signals.

In addition, the gear control module may also determine whether to perform up-shifting according to a combination of the working conditions A2, B2, C2... and user input signals DIA2', DIB2', DIC2'.... In this embodiment, the user input signals DIA2', DIB2', DIC2'... are used as high-gear prohibition signals. Specifically, in a certain period, even if a certain working condition A2, B2, C2... is satisfied, the gear control module executes no up-shifting operation because there are corresponding user input signals DIA2', DIB2', DIC2'.... The gear control module can execute an up-shifting operation only if there are no corresponding user input signals DIA2', DIB2', DIC2'....

The user input signals DIA2 (DIA2'), DIB2 (DIB2'), DIC2 (DIC2')... are control signals respectively corresponding to conditions A2, B2, C2..., and can be input by means of respective user signal interfaces. The high-gear prohibition signals DIA2', DIB2', DIC2'... are respectively inverse to the high-gear forcing signals DIA2, DIB2, DIC2..., and each high-gear prohibition signal and the corresponding high-gear forcing signal can be input by means of the same interface, but not at the same time, which avoids the misoperation by a user.

The low-gear forcing signals DIA1, DIB1, DIC1... are used as the high-gear prohibition signals DIA2', DIB2', DIC2'..., and the high-gear forcing signals DIA2, DIB2, DIC2... are used as the low-gear prohibition signals DIA1', DIB1', DIC1' ....

According to a further feasible solution, when one of the high-gear working conditions A2, B2 and C2 is satisfied, it is also required to determine whether the gear is previously switched to the low gear due to the corresponding low-gear working condition A1, B1 or C1 being satisfied. If the gear is previously switched to the low gear due to the corresponding low-gear working condition A1, B1 or C1 being satisfied, the gear is allowed to switch to the high gear, and the gear is previously switched to the low gear in an instance which is not due to the corresponding low-gear working condition A1, B1 or C1 being satisfied, the gear is not allowed to switch to the high gear. For example, when the high-gear working condition A2 is satisfied, it is also required to determine whether the gear is previously switched to the low gear due to the corresponding low-gear working condition A1 being satisfied. If the gear is previously switched to the low gear due to the corresponding low-gear working condition A1 being satisfied, the gear is allowed to switch to the high gear, and if the gear is switched to the low gear in an instance which is not due to the corresponding low-gear working condition A1 being satisfied (the gear is switched to the low gear due to the low-gear working conditions B1 and C1 being satisfied or due to a user forcing signal, for example), the gear is not allowed to switch to the high gear.

An exemplary flow of the gear control algorithm executable in the gear control module of the dual-gear pump is described below with reference to Fig. 2.

Referring to Fig. 2, at first, in step S1, the dual-gear pump is started.

Next, in step S2, a driving system of the dual-gear pump is initialized, and a user inputs a set pressure, flow and rotational speed, a pump working mode, pump technical data, etc. The dual-gear pump initially pumps liquid in a high gear, and monitors down-shifting working conditions SA1, SB1 and SC1 in the current period and optionally user input signals SDIA1, SDIB1, SDIC1, SDIA1', SDIB1' and SDIC1' related to the low gear.

Next, in step S3, the gear control module determines whether the low-gear working condition A1 in the current period is satisfied, and optionally, whether there are corresponding user input signals (SDIA1 and SDIA1') related to the low gear, so as to determine whether the low gear is suitable in the current period.

If it is determined in step S3 that the low gear is suitable in the current period, the process turns to step S4; and if it is determined that the low gear is not suitable in the current period, the process turns to step S5.

In step S4, the gear of the pump is set to the low gear, and then the process turns to step S15.

In step S5, the gear control module determines whether the low-gear working condition B1 in the current period is satisfied, and optionally, whether there are corresponding user input signals (SDIB1 and SDIB1') related to the low gear, so as to determine whether the low gear is suitable in the current period.

If it is determined in step S5 that the low gear is suitable in the current period, the process turns to step S6; and if it is determined that the low gear is not suitable in the current period, the process turns to step S7.

In step S6, the gear of the pump is set to the low gear, and then the process turns to step S15.

In step S7, the gear control module determines whether the low-gear working condition C1 in the current period is satisfied, and optionally, whether there are corresponding user input signals (SDIC1 and SDIC1') related to the low gear, so as to determine whether the low gear is suitable in the current period.

If it is determined in step S7 that the low gear is suitable in the current period, the process turns to step S8; and if it is determined that the low gear is not suitable in the current period, the process turns to step S9.

In step S8, the gear of the pump is set to the low gear, and then the process turns to step S15.

In step S9, the gear control module determines whether the high-gear working condition A2 in the current period is satisfied and the low-gear working condition A1 in the current period is not satisfied, and optionally, whether there are corresponding user input signals (SDIA2 and SDIA2') related to the high gear, so as to determine whether the high-gear condition is satisfied in the current period.

If it is determined in step S9 that the high-gear condition is satisfied in the current period, the process turns to step S10; and if it is determined that the high-gear condition is not satisfied in the current period, the process turns to step S11.

In step S10, the gear of the pump is set to the high gear, and then the process turns to step S15.

In step S11, the gear control module determines whether the high-gear working condition B2 in the current period is satisfied and the low-gear working condition B1 in the current period is not satisfied, and optionally, whether there are corresponding user input signals (SDIB2 and SDIB2') related to the high gear, so as to determine whether the high-gear condition is satisfied in the current period.

If it is determined in step S11 that the high-gear condition is satisfied in the current period, the process turns to step S12; and if it is determined that the high-gear condition is not satisfied in the current period, the process turns to step S13.

In step S12, the gear of the pump is set to the high gear, and then the process turns to step S15.

In step S13, the gear control module determines whether the high-gear working condition C2 in the current period is satisfied and the low-gear working condition C1 in the current period is not satisfied, and optionally, whether there are corresponding user input signals (SDIC2 and SDIC2') related to the high gear, so as to determine whether the high-gear condition is satisfied in the current period.

If it is determined in step S13 that the high-gear condition is satisfied in the current period, the process turns to step S14; and if it is determined that the high-gear condition is not satisfied in the current period, the process turns to step S3.

In step S14, the gear of the pump is set to the high gear, and then the process turns to step S15.

In step S15, the dual-gear pump is controlled to work in a set gear, and then the process turns to step S3 to execute the next period of monitoring and gear setting cycle.

It can be understood that those skilled in the art can make various modifications to the steps in the flow in Fig. 2, for example, adding a determination condition, etc.

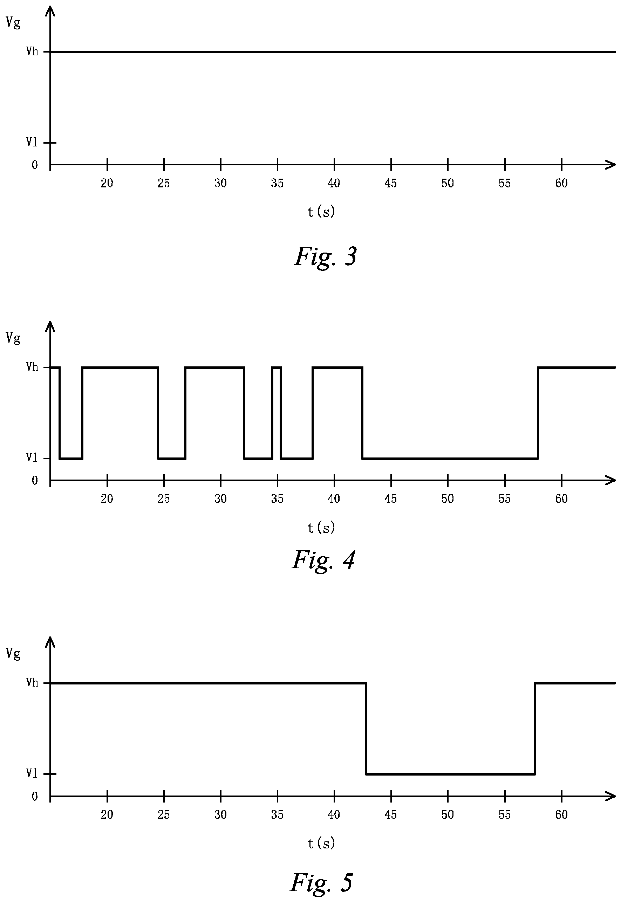

In order to verify the technical effect of the gear control algorithm of the present application, different gear control technologies for the dual-gear pump are tested using a corresponding test bench, and test results can be seen from the comparison in Figs. 3 to 5. In these figures, the horizontal axis represents time t elapsed after start of the dual-gear pump, and the vertical axis represents the displacement of the pump Vg, that is, the displacement per revolution, which typically comprises a high displacement Vh in the high gear and a low displacement Vl in the low gear.

Fig. 3 illustrates the displacement of the dual-gear pump without the addition of the gear control algorithm, in which the double-gear pump maintains the output by the high displacement Vh in the high gear, that is to say, the dual-gear pump maintains a fixed displacement. Such a solution has poor stability in a low-speed pressure holding phase.

Fig. 4 illustrates the displacement of the dual-gear pump solely relying on a physical working condition for gear switching, in which the dual-gear pump maintains frequent switching between the high displacement Vh in the high gear and the low displacement Vl in the low gear.

Such frequent switching is often unnecessary and will cause fluctuations in the output pressure.

Fig. 5 illustrates the displacement of the dual-gear pump with the use of the gear control algorithm of the present application in combination with user inputs, in which when conditions are satisfied, the dual-gear pump is automatically switched to the low displacement VI in the low gear for a period of time, and at the same time, parameters of a pressure loop are self-adapted to keep a stable pressure. The test results in Fig. 5 show that the gear control algorithm of the present application can be stably applied to different working conditions.

The gear control algorithm of the present application is applicable to various multi-gear pumps, without limitation on the dual-gear pump described above. In general, the multi-gear pump comprises a plurality of gears, in which there is at least a pair of high and low gears with respect to one another (the displacement in the high gear is greater than that in the low gear), for example, the third gear and the second gear, and the second gear and the first gear. The gear control algorithm of the present application can automatically control the gear of the pump to switch between the high gear and the low gear. Switching between different high and low gears can be realized, provided that the corresponding control conditions are set.

The gear control algorithm is added to the intrinsic control system of the multi-gear pump of the present application, which makes it possible to adapt to various variable-speed/variable-displacement applications, and makes it unnecessary for the end user to carry out extra programming therefor, thereby saving the time and costs for the user.

In addition, an external signal interface is reserved such that the end user can influence a gear control result by actively inputting a control signal through the external signal interface as desired, thereby providing high practicability.

In addition, the gear control algorithm is integrated in the driving system of the multi-gear pump, which makes it even possible for the end user to omit the PLC, thereby saving wiring and costs.

In addition, according to the gear control algorithm of the present application, the multi-gear pump can realize automatic gear switching, such that the displacement of the multi-gear pump is suitable for a specific working condition, thereby improving the working precision and the pump discharge precision.

In addition, by means of the setting of various parameters in gear switching, for example, the second pressure difference threshold set in the high-gear working condition A2 being greater than the first pressure difference threshold set in the corresponding low-gear working condition A1, the working stability can be improved to avoid too much frequent gear switching and pressure fluctuations.

**Claims**

1. A multi-gear pump, comprising:

a pump part (1);
a driving system for driving the pump part (1), the driving system comprising a motor (2), a control board (3), and a frequency converter (4), wherein the control board (3) and the frequency converter (4) are configured to control the motor (2);
a sensor (5) connected to an output of the pump part (1), wherein the frequency converter (4) is configured to obtain a signal from the sensor (5) for controlling of the pump part (1); and
a gear control module integrated in the control board (3) or the frequency converter (4);
wherein the multi-gear pump is configured to transport a liquid medium and has a plurality of switchable gears configured to determine a pump displacement, the pump displacement being an output fluid volume of the pump with one revolution of rotation of a pump rotor, wherein each gear is realized by an internal gear-switching structure, wherein the plurality of switchable gears include at least a high gear and a low gear, wherein the gear control module is configured to switch the gear of the multi-gear pump from the high gear to the low gear when a low-gear condition is satisfied within one control period, and to switch the gear of the multi-gear pump from the low gear to the high gear when a high-gear condition is satisfied within one control period,
wherein the low-gear condition comprises a low-gear working condition A1, and the low-gear working condition A1 is defined as:

the difference ($\Delta P$) between a set output pressure (P_cmd) and a real output pressure (P_real) of the pump being less than a set first pressure difference threshold ($\Delta P\_threshold1$), and
a real rotational speed (N_real) of the pump being below a set pump speed limit, and
the real output pressure (P_real) of the pump being above a set first pressure limit (P_lim1);

wherein the high-gear condition comprises a high-gear working condition A2 corresponding to the low-gear working condition A1, and the high-gear working condition A2 is defined as:

the low-gear working condition A1 in the previous period being satisfied, and the low-gear working condition A1 in the current period being not satisfied, and

the difference (ΔP) between a set output pressure and a real output pressure of the pump being greater than a set second pressure difference threshold (ΔP_threshold2), wherein the second pressure difference threshold (ΔP_threshold2) is greater than the first pressure difference threshold (ΔP_threshold1), or, the real output pressure (P_real) of the pump is below a first selected pressure value (X1), wherein the first selected pressure value is lower than the first pressure limit (P_lim1).

2. The multi-gear pump of claim 1, wherein the first selected pressure value (X1) is equal to the first pressure limit (P_lim1) minus a set pressure value; or, the first selected pressure value (X1) is a user-set value.

3. The multi-gear pump of claim 1 or 2, wherein the low-gear condition further comprises a low-gear working condition B1 parallel to the low-gear working condition A1, and the low-gear working condition B 1 is defined as:

the real output pressure (P_real) of the pump being above a set second pressure limit (P_lim2), and the set output pressure (P_cmd) of the pump being above a set third pressure limit (P_lim3); and
the high-gear condition further comprises a high-gear working condition B2 corresponding to the low-gear working condition B1, and the high-gear working condition B2 is defined as:

the low-gear working condition B1 in the previous period being satisfied, and the low-gear working condition B 1 in the current period being not satisfied; and
the real output pressure (P_real) of the pump being below a second selected pressure value (X2), wherein the second selected pressure value is lower than the second pressure limit (P_lim2); or, the set output pressure (P_cmd) of the pump is below a third selected pressure value (X3), wherein the third selected pressure value is lower than the third pressure limit (P_lim3).

4. The multi-gear pump of claim 3, wherein the second selected pressure value (X2) is equal to the second pressure limit (P_lim2) minus a set pressure value; or, the second selected pressure value (X2) is a user-set value; and
the third selected pressure value (X3) is equal to the third pressure limit (P_lim3) minus a set pressure value; or, the third selected pressure value is a user-set value.

5. The multi-gear pump of claim 3 or 4, wherein the low-gear condition further comprises a low-gear working condition C1 parallel to the low-gear working conditions A1 and B1, and the low-gear working condition C1 is defined as:

a set output flow (Q_cmd) of the pump being less than a set output flow limit (Q_cmd_lim); and
the high-gear condition further comprises a high-gear working condition C2 corresponding to the low-gear working condition C1, and the high-gear working condition C2 is defined as:

the low-gear working condition C1 in the previous period being satisfied, and the low-gear working condition C1 in the current period being not satisfied; and
the set output flow (Q_cmd) of the pump being greater than a selected flow value (X4), wherein the selected flow value is less than the output flow limit.

6. The multi-gear pump of claim 5, wherein the selected flow value (X4) is equal to the output flow limit (Q_cmd_lim) minus a set flow value; or, the selected flow value is a user-set value.

7. The multi-gear pump of claim 5 or 6, wherein the gear control module is configured to switch the gear of the multi-gear pump from the high gear to the low gear when any one of the low-gear working conditions A1, B1 and C1 is satisfied, and to switch the gear of the multi-gear pump from the low gear to the high gear when any one of the high-gear working conditions A2, B2 and C2 is satisfied.

8. The multi-gear pump of claim 7, wherein the gear control module is configured to further determine, when one of the high-gear working conditions A2, B2 and C2 is satisfied, whether the gear is previously switched to the low gear due to the corresponding low-gear working condition A1, B1 or C1 being satisfied; and if the gear is previously switched to the low gear due to the corresponding low-gear working condition A1, B1 or C1 being satisfied, the gear control module allows the gear to be switched to the high gear, and if the gear is previously switched to the low gear in an instance which is not due to the corresponding low-gear working condition A1, B1 or C1 being satisfied, the gear control module does not allow the gear to be switched to the high gear.

9. The multi-gear pump of any one of claims 1 to 8, further comprising a user signal interface, wherein the gear control module is configured to receive a signal input by a user through the user signal interface, and the signal input by the user comprises a low-gear forcing signal; and the gear control module is configured to: based on the received low-gear forcing signal, switch the gear of the multi-gear pump from the high gear to the low gear, regardless of whether the low-gear condition is satisfied; optionally, the signal input by the user further comprises a low-gear prohibition signal, and the low-gear prohibition signal does not coexist with the low-gear forcing signal; and the gear control module is configured to: based on the received low-gear prohibition signal, prohibit switching the gear of the multi-gear pump from the high gear to the low gear, regardless of whether the low-gear condition is satisfied.

10. The multi-gear pump of claim 9, wherein the signal input by the user comprises a high-gear forcing signal; and the gear control module is configured to: based on the received high-gear forcing signal, switch the gear of the multi-gear pump from the low gear to the high gear, regardless of whether the high-gear condition is satisfied; optionally, the signal input by the user further comprises a high-gear prohibition signal, and the high-gear prohibition signal does not coexist with the high-gear forcing signal; and the gear control module is configured to: based on the received high-gear prohibition signal, prohibit switching the gear of the multi-gear pump from the low gear to the high gear, regardless of whether the high-gear condition is satisfied.

11. The multi-gear pump of claim 10, wherein the low-gear forcing signal is also used as the high-gear prohibition signal, and the high-gear forcing signal is also used as the low-gear prohibition signal.

12. The multi-gear pump of any one of claims 1 to 11, wherein the multi-gear pump is a dual-gear pump.

**Patentansprüche**

1. Mehrgangpumpe, die Folgendes umfasst:

einen Pumpenteil (1);
ein Antriebssystem zum Antreiben des Pumpenteils (1), wobei das Antriebssystem einen Motor (2), eine Steuerplatine (3) und einen Frequenzwandler (4) umfasst, wobei die Steuerplatine (3) und der Frequenzwandler (4) ausgelegt sind zum Steuern des Motors (2);
einen Sensor (5), verbunden mit einem Ausgang des Pumpenteils (1), wobei der Frequenzwandler (4) ausgelegt ist zum Erhalten eines Signals vom Sensor (5) zum Steuern des Pumpenteils (1); und
ein Gangsteuermodul, integriert in die Steuerplatine (3) oder den Frequenzwandler (4); wobei die Mehrgangpumpe ausgelegt ist zum Transportieren eines flüssigen Mediums und mehrere schaltbare Gänge umfasst, die ausgelegt sind zum Bestimmen einer Pumpenverdrängung, wobei die Pumpenverdrängung ein Ausgangsfluidvolumen der Pumpe mit einer Umdrehung der Rotation des Pumpenrotors ist, wobei jeder Gang durch eine interne Gangschaltstruktur umgesetzt ist, wobei die mehreren schaltbaren Gänge zumindest einen hohen Gang und einen niedrigen Gang umfassen,
wobei das Gangsteuermodul ausgelegt ist zum Schalten des Gangs der Mehrgangpumpe von dem hohen Gang in den niedrigen Gang, wenn eine Bedingung für den niedrigen Gang innerhalb einer Steuerperiode erfüllt wird, und Schalten des Gangs der Mehrgangpumpe in den hohen Gang, wenn eine Bedingung für den hohen Gang innerhalb einer Steuerperiode erfüllt wird,
wobei die Bedingung für den niedrigen Gang eine Arbeitsbedingung für den niedrigen Gang A1 umfasst und wobei die Arbeitsbedingung für den niedrigen Gang A1 dadurch definiert ist, dass:

die Differenz ($\Delta$P) zwischen einem festgelegten Ausgangsdruck (P_cmd) und einem tatsächlichen Ausgangsdruck (P_real) kleiner als eine erste Druckdifferenzschwelle ($\Delta$P_threshold1) ist, und
eine tatsächliche Rotationsgeschwindigkeit (N_real) der Pumpe unter einer festgelegten Pumpendrehzahlgrenze ist, und
der tatsächliche Ausgangsdruck (P_real) der Pumpe über einer festgelegten ersten Druckgrenze (P_lim1) ist;
wobei die Bedingung für den hohen Gang eine Arbeitsbedingung für den hohen Gang A2 entsprechend der Arbeitsbedingung für den niedrigen Gang A1 umfasst und wobei die Arbeitsbedingung für den hohen Gang A2 dadurch definiert ist, dass:

die Arbeitsbedingung für den niedrigen Gang A1 in der vorherigen Periode erfüllt wurde und die Arbeitsbedingung für den niedrigen Gang A1 in der aktuellen Periode nicht erfüllt wird, und
die Differenz ($\Delta$P) zwischen einem festgelegten Ausgangsdruck und einem tatsächlichen Ausgangsdruck der Pumpe größer als eine festgelegte zweite Druckdifferenzschwelle ($\Delta$P_threshold2) ist, wobei die zweite Druckdifferenzschwelle ($\Delta$P_threshold2) größer als die erste Druckdifferenzschwelle ($\Delta$P_threshold1) ist, oder, der tatsächliche Ausgangsdruck (P_real) der Pumpe unter einem ersten ausgewählten Druckwert (X1) ist, wobei der erste ausgewählte Druckwert niedriger als die erste Druckgrenze (P_lim1) ist.

2. Mehrgangpumpe nach Anspruch 1, wobei der erste ausgewählte Druckwert (X1) gleich der ersten Druckgrenze (P_lim1) minus einem festgelegten Druckwert ist; oder wobei der erste ausgewählte Druckwert (X1) ein vom Benutzer festgelegter Wert ist.

3. Mehrgangpumpe nach Anspruch 1 oder 2, wobei die Bedingung für den niedrigen Gang ferner eine Arbeitsbedingung für den niedrigen Gang B1 parallel zur Arbeitsbedingung für den niedrigen Gang A1 umfasst und wobei die Arbeitsbedingung für den niedrigen Gang B1 dadurch definiert ist, dass:

der tatsächliche Ausgangsdruck (P_real) der Pumpe über einer festgelegten zweiten Druckgrenze (P_lim2) ist und dass der festgelegte Ausgangsdruck (P_cmd) der Pumpe über einer festgelegten dritten Druckgrenze (P_lim3) ist; und
wobei die Bedingung für den hohen Gang ferner eine Arbeitsbedingung für den hohen Gang B2 entsprechend der Arbeitsbedingung für den niedrigen Gang B1 umfasst und wobei die Arbeitsbedingung für den hohen Gang B2 dadurch definiert ist, dass:
die Arbeitsbedingung für den niedrigen Gang B1 in der vorherigen Periode erfüllt wurde und die Arbeitsbedingung für den niedrigen Gang B1 in der aktuellen Periode nicht erfüllt wird; und dass der tatsächliche Ausgangsdruck (P_real) der Pumpe unter einem zweiten ausgewählten Druckwert (X2) ist, wobei der zweite ausgewählte Druckwert niedriger als die zweite Druckgrenze (P_lim2) ist; oder dass der festgelegte Ausgangsdruck (P_cmd) der Pumpe unter einem dritten ausgewählten Druckwert (X3) ist, wobei der dritte ausgewählte Druckwert niedriger als die dritte Druckgrenze (P_lim3) ist.

4. Mehrgangpumpe nach Anspruch 3, wobei der zweite ausgewählte Druckwert (X2) gleich der zweiten Druckgrenze (P_lim2) minus einem festgelegten Druckwert ist; oder wobei der zweite ausgewählte Druckwert (X2) ein vom Benutzer festgelegter Wert ist; und
wobei der dritte ausgewählte Druckwert (X3) gleich der dritten Druckgrenze (P_lim3) minus einem festgelegten Druckwert ist; oder wobei der dritte ausgewählte Druckwert ein vom Benutzer festgelegter Wert ist.

5. Mehrgangpumpe nach Anspruch 3 oder 4, wobei die Bedingung für den niedrigen Gang ferner eine Arbeitsbedingung für den niedrigen Gang C1 parallel zu den Arbeitsbedingungen für den niedrigen Gang A1 und B1 umfasst und wobei die Arbeitsbedingung für den niedrigen Gang C1 dadurch definiert ist, dass:

ein festgelegter Ausgangsstrom (Q_cmd) der Pumpe kleiner als eine festgelegte Ausgangsstromgrenze (Q_cmd_lim) ist; und
wobei die Bedingung für den hohen Gang ferner eine Arbeitsbedingung für den hohen Gang C2 entsprechend der Arbeitsbedingung für den niedrigen Gang C1 umfasst und wobei die Arbeitsbedingung für den hohen Gang C2 dadurch definiert ist, dass:
die Arbeitsbedingung für den niedrigen Gang C1 in der vorherigen Periode erfüllt wurde und die Arbeitsbedingung für den niedrigen Gang C1 in der aktuellen Periode nicht erfüllt wird; und dass der festgelegte Ausgangsstrom (Q_cmd) der Pumpe größer als ein ausgewählter Stromwert (X4) ist, wobei der ausgewählte Stromwert kleiner als die Ausgangsstromgrenze ist.

6. Mehrgangpumpe nach Anspruch 5, wobei der ausgewählte Stromwert (X4) gleich der Ausgangsstromgrenze (Q_cmd_lim) minus einem festgelegten Stromwert ist; oder wobei der ausgewählte Stromwert ein vom Benutzer festgelegter Wert ist.

7. Mehrgangpumpe nach Anspruch 5 oder 6, wobei das Gangsteuermodul ausgelegt ist zum Schalten des Gangs der Mehrgangpumpe vom hohen Gang in den niedrigen Gang, wenn eine beliebige der Arbeitsbedingungen für den niedrigen Gang A1, B1 und C1 erfüllt ist, und zum Schalten des Gangs der Mehrgangpumpe vom niedrigen Gang in den hohen Gang, wenn eine beliebige der Arbeitsbedingungen für den hohen Gang A2, B2 und C2 erfüllt ist.

8. Mehrgangpumpe nach Anspruch 7, wobei das Gangsteuermodul ferner ausgelegt ist zum Bestimmen, wenn eine der Arbeitsbedingungen für den hohen Gang A2, B2 und C2 erfüllt ist, ob der Gang vorher in den niedrigen Gang geschaltet wurde, weil die entsprechende Arbeitsbedingung für den niedrigen Gang A1, B1 oder C1 erfüllt wurde; und wenn der Gang vorher in den niedrigen Gang geschaltet wurde, da die entsprechende Arbeitsbedingung für den niedrigen Gang A1, B1 oder C1 erfüllt wurde, ermöglicht das Gangsteuermodul dem Gang, in den hohen Gang geschaltet zu werden, und wenn der Gang vorher in einem Fall in den niedrigen Gang geschaltet wurde, der nicht darauf zurückzuführen ist, dass eine der Arbeitsbedingungen für den niedrigen Gang A1, B1 oder C1 erfüllt wurde, ermöglicht das Gangsteuermodul dem Gang nicht, in den hohen Gang geschaltet zu werden.

9. Mehrgangpumpe nach einem der Ansprüche 1 bis 8, ferner umfassend eine Benutzersignalschnittstelle, wobei das Gangsteuermodul ausgelegt ist zum Empfangen eines Signals, das durch einen Benutzer über die Benutzersignalschnittstelle eingegeben wird, und wobei das durch den Benutzer eingegebene Signal ein Erzwingungssignal für den niedrigen Gang umfasst; und wobei das Gangsteuermodul ausgelegt ist zum: basierend auf dem empfangenen Erzwingungssignal für den niedrigen Gang, Schalten des Gangs der Mehrgangpumpe aus dem hohen Gang in den niedrigen Gang, unabhängig davon, ob die Bedingung für den niedrigen Gang erfüllt ist; wobei, optional, das durch den Benutzer eingegebene Signal ferner ein Unterbindungssignal für den niedrigen Gang umfasst, und wobei das Unterbindungssignal für den niedrigen Gang nicht gleichzeitig mit dem Erzwingungssignal für den niedrigen Gang vorhanden ist; und wobei das Gangsteuermodul ausgelegt ist zum: basierend auf dem empfangenen Unterbindungssignal für den niedrigen Gang, Unterbinden des Schaltens des Gangs der Mehrgangpumpe vom hohen Gang in den niedrigen Gang, unabhängig davon, ob die Bedingung für den niedrigen Gang erfüllt ist.

10. Mehrgangpumpe nach Anspruch 9, wobei das durch den Benutzer eingegebene Signal ein Erzwingungssignal für den hohen Gang umfasst; und wobei das Gangsteuermodul ausgelegt ist zum: basierend auf dem empfangenen Erzwingungssignal für den hohen Gang, Schalten des Gangs der Mehrgangpumpe aus dem niedrigen Gang in den hohen Gang, unabhängig davon, ob die Bedingung für den hohen Gang erfüllt ist; wobei, optional, das durch den Benutzer eingegebene Signal ferner ein Unterbindungssignal für den hohen Gang umfasst, und wobei das Unterbindungssignal für den hohen Gang nicht gleichzeitig mit dem Erzwingungssignal für den hohen Gang vorhanden ist; und wobei das Gangsteuermodul ausgelegt ist zum: basierend auf dem empfangenen Unterbindungssignal für den hohen Gang, Unterbinden des Schaltens des Gangs der Mehrgangpumpe vom niedrigen Gang in den hohen Gang, unabhängig davon, ob die Bedingung für den hohen Gang erfüllt ist.

11. Mehrgangpumpe nach Anspruch 10, wobei das Erzwingungssignal für den niedrigen Gang auch als das Unterbindungssignal für den hohen Gang verwendet wird und wobei das Erzwingungssignal für den hohen Gang auch als Unterbindungssignal für den niedrigen Gang verwendet wird.

12. Mehrgangpumpe nach einem der Ansprüche 1 bis 11, wobei die Mehrgangpumpe eine Zweigangpumpe ist.

**Revendications**

1. Pompe à engrenages multiples, comprenant :

une partie pompe (1) ;
un système d'entraînement pour entraîner la partie pompe (1), le système d'entraînement comprenant un moteur (2), une carte de commande (3), et un convertisseur de fréquence (4), la carte de commande (3) et le convertisseur de fréquence (4) étant configurés pour commander le moteur (2) ;
un capteur (5) connecté à une sortie de la partie pompe (1), le convertisseur de fréquence (4) étant configuré pour obtenir un signal en provenance du capteur (5) afin de commander la partie pompe (1) ; et
un module de commande d'engrenage intégré dans la carte de commande (3) ou le convertisseur de fréquence (4) ;
la pompe à engrenages multiples étant configurée pour transporter un milieu liquide et ayant une pluralité d'engrenages commutables configurés pour déterminer un déplacement de pompe, le déplacement de pompe étant un volume de fluide de sortie de la pompe avec une révolution de rotation d'un rotor de pompe, chaque engrenage étant réalisé par une structure de commutation d'engrenage interne, la pluralité d'engrenages commutables incluant au moins un engrenage élevé et un engrenage bas,
le module de commande d'engrenage étant configuré pour commuter l'engrenage de la pompe à engrenages multiples de l'engrenage élevé vers l'engrenage bas lorsqu'une condition d'engrenage bas est satisfaite au sein d'une période de commande, et pour commuter l'engrenage de la pompe à engrenages multiples de l'engrenage bas vers l'engrenage élevé lorsqu'une condition d'engrenage élevé est satisfaite au sein d'une période de commande,
la condition d'engrenage bas comprenant une condition de fonctionnement d'engrenage bas A1, et la condition de fonctionnement d'engrenage bas A1 étant définie comme :

le fait que la différence ($\Delta P$) entre une pression de sortie réglée (P_cmd) et une pression de sortie réelle (P_real) de la pompe est moindre qu'un premier seuil de différence de pression réglé ($\Delta$P_threshold1), et
le fait qu'une vitesse de rotation réelle (N_real) de la pompe est au-dessous d'une limite de vitesse de pompe réglée, et
le fait que la pression de sortie réelle (P_real) de la pompe est au-dessus d'une première limite de pression réglée (P_lim1) ;

la condition d'engrenage élevé comprenant une condition de fonctionnement d'engrenage élevé A2 correspondant à la condition de fonctionnement d'engrenage bas A1, et la condition de fonctionnement d'engrenage élevé A2 étant définie comme :

le fait que la condition de fonctionnement d'engrenage bas A1 dans la période précédente est satisfaite, et le fait que la condition de fonctionnement d'engrenage bas A1 dans la période actuelle n'est pas satisfaite, et

le fait que la différence ($\Delta P$) entre une pression de sortie réglée et une pression de sortie réelle de la pompe est supérieure à un deuxième seuil de différence de pression réglé ($\Delta P\_threshold2$), le deuxième seuil de différence de pression ($\Delta P\_threshold2$) étant supérieur au premier seuil de différence de pression ($\Delta P\_threshold1$), ou, la pression de sortie réelle (P_real) de la pompe étant au-dessous d'une première valeur de pression sélectionnée (X1), la première valeur de pression sélectionnée étant inférieure à la première limite de pression (P_lim1).

2. Pompe à engrenages multiples selon la revendication 1, dans laquelle la première valeur de pression sélectionnée (X1) est égale à la première limite de pression (P_lim1) moins une valeur de pression réglée ; ou, la première valeur de pression sélectionnée (X1) est une valeur réglée par l'utilisateur.

3. Pompe à engrenages multiples selon la revendication 1 ou la revendication 2, dans laquelle la condition d'engrenage bas comprend en outre une condition de fonctionnement d'engrenage bas B1 parallèle à la condition de fonctionnement d'engrenage bas A1, et la condition de fonctionnement d'engrenage bas B1 est définie comme :

le fait que la pression de sortie réelle (P_real) de la pompe est au-dessus d'une deuxième limite de pression réglée (P_lim2), et que la pression de sortie réglée (P_cmd) de la pompe est au-dessus d'une troisième limite de pression réglée (P_lim3) ; et la condition d'engrenage élevé comprend en outre une condition de fonctionnement d'engrenage élevé B2 correspondant à la condition de fonctionnement d'engrenage bas B1, et la condition de fonctionnement d'engrenage élevé B2 est définie comme :

le fait que la condition de fonctionnement d'engrenage bas B1 dans la période précédente est satisfaite, et que la condition de fonctionnement d'engrenage bas B1 dans la période actuelle n'est pas satisfaite ; et le fait que la pression de sortie réelle (P_real) de la pompe est au-dessous d'une deuxième valeur de pression sélectionnée (X2), la deuxième valeur de pression sélectionnée étant inférieure à la deuxième limite de pression (P_lim2) ; ou, le fait que la pression de sortie réglée (P_cmd) de la pompe est au-dessous d'une troisième valeur de pression sélectionnée (X3), la troisième valeur de pression sélectionnée étant inférieure à la troisième limite de pression (P_lim3).

4. Pompe à engrenages multiples selon la revendication 3, dans laquelle la deuxième valeur de pression sélectionnée (X2) est égale à la deuxième limite de pression (P_lim2) moins une valeur de pression réglée ;

ou, la deuxième valeur de pression sélectionnée (X2) est une valeur réglée par l'utilisateur ; et la troisième valeur de pression sélectionnée (X3) est égale à la troisième limite de pression (P_lim3) moins une valeur de pression réglée ; ou, la troisième valeur de pression sélectionnée est une valeur réglée par l'utilisateur.

5. Pompe à engrenages multiples selon la revendication 3 ou la revendication 4, dans laquelle la condition d'engrenage bas comprend en outre une condition de fonctionnement d'engrenage bas C1 parallèle aux conditions de fonctionnement d'engrenage bas A1 et B1, et la condition de fonctionnement d'engrenage bas C1 est définie comme :

le fait qu'un débit de sortie réglé (Q_cmd) de la pompe est moindre qu'une limite de débit de sortie réglée (Q_cmd_lim) ; et la condition d'engrenage élevé comprend en outre une condition de fonctionnement d'engrenage élevé C2 correspondant à la condition de fonctionnement d'engrenage bas C1, et la condition de fonctionnement d'engrenage élevé C2 est définie comme : le fait que la condition de fonctionnement d'engrenage bas C1 dans la période précédente est satisfaite, et que la condition de fonctionnement d'engrenage bas C1 dans la période actuelle n'est pas satisfaite ; et le fait que le débit de sortie réglé (Q_cmd) de la pompe est supérieur à une valeur de débit sélectionnée (X4), la valeur de débit sélectionnée étant inférieure à la limite de débit de sortie.

**6.** Pompe à engrenages multiples selon la revendication 5, dans laquelle la valeur de débit sélectionnée (X4) est égale à la limite de débit de sortie (Q_cmd_lim) moins une valeur de débit réglée ; ou, la valeur de débit sélectionnée est une valeur réglée par l'utilisateur.

**7.** Pompe à engrenages multiples selon la revendication 5 ou la revendication 6, dans laquelle le module de commande d'engrenage est configuré pour commuter l'engrenage de la pompe à engrenages multiples de l'engrenage élevé vers l'engrenage bas lorsque l'une quelconque des conditions de travail à engrenage bas A1, B1 et C1 est satisfaite, et pour commuter l'engrenage de la pompe à engrenages multiples de l'engrenage bas vers l'engrenage élevé lorsque l'une quelconque des conditions de travail à engrenage élevé A2, B2 et C2 est satisfaite.

**8.** Pompe à engrenages multiples selon la revendication 7, dans laquelle le module de commande d'engrenage est configuré pour déterminer en outre, lorsque l'une des conditions de travail à engrenage élevé A2, B2 et C2 est satisfaite, si l'engrenage est précédemment commuté vers l'engrenage bas dû au fait que la condition de fonctionnement d'engrenage bas correspondante A1, B1 ou C1 est satisfaite ; et si l'engrenage est précédemment commuté vers l'engrenage bas dû au fait que la condition de fonctionnement d'engrenage bas correspondante A1, B1 ou C1 est satisfaite, le module de commande d'engrenage permet à l'engrenage d'être commuté vers l'engrenage élevé, et si l'engrenage est précédemment commuté vers l'engrenage bas dans un cas qui n'est pas dû au fait que la condition de fonctionnement d'engrenage bas correspondante A1, B1 ou C1 est satisfaite, le module de commande d'engrenage ne permet pas à l'engrenage d'être commuté vers l'engrenage élevé.

**9.** Pompe à engrenages multiples selon l'une quelconque des revendications 1 à 8, comprenant en outre une interface de signal d'utilisateur, le module de commande d'engrenage étant configuré pour recevoir un signal entré par un utilisateur par le biais de l'interface de signal d'utilisateur, et le signal entré par l'utilisateur comprenant un signal de forçage d'engrenage bas ; et le module de commande d'engrenage étant configuré pour : sur la base du signal de forçage d'engrenage bas reçu, commuter l'engrenage de la pompe à engrenages multiples de l'engrenage élevé vers l'engrenage bas, indépendamment du fait que la condition d'engrenage bas soit satisfaite ou non ; facultativement, le signal entré par l'utilisateur comprenant en outre un signal d'interdiction d'engrenage bas, et le signal d'interdiction d'engrenage bas ne coexistant pas avec le signal de forçage d'engrenage bas ; et le module de commande d'engrenage étant configuré pour : sur la base du signal d'interdiction d'engrenage bas reçu, interdire la commutation de l'engrenage de la pompe à engrenages multiples de l'engrenage élevé vers l'engrenage bas, indépendamment du fait que la condition d'engrenage bas soit satisfaite ou non.

**10.** Pompe à engrenages multiples selon la revendications 9, dans laquelle le signal entré par l'utilisateur comprend un signal de forçage d'engrenage élevé ; et le module de commande d'engrenage est configuré pour : sur la base du signal de forçage d'engrenage élevé reçu, commuter l'engrenage de la pompe à engrenages multiples de l'engrenage bas vers l'engrenage élevé, indépendamment du fait que la condition d'engrenage élevé soit satisfaite ou non ; facultativement, le signal entré par l'utilisateur comprend en outre un signal d'interdiction d'engrenage élevé, et le signal d'interdiction d'engrenage élevé ne coexiste pas avec le signal de forçage d'engrenage élevé ; et le module de commande d'engrenage est configuré pour : sur la base du signal d'interdiction d'engrenage élevé reçu, interdire la commutation de l'engrenage de la pompe à engrenages multiples de l'engrenage bas vers l'engrenage élevé, indépendamment du fait que la condition d'engrenage élevé soit satisfaite ou non.

**11.** Pompe à engrenages multiples selon la revendication 10, dans laquelle le signal de forçage d'engrenage bas est également utilisé en tant que signal d'interdiction d'engrenage élevé, et le signal de forçage d'engrenage élevé est également utilisé en tant que signal d'interdiction d'engrenage bas.

**12.** Pompe à engrenages multiples selon l'une quelconque des revendications 1 à 11, dans laquelle la pompe à engrenages multiples est une pompe à double engrenage.

*Fig. 1*

*Fig. 2*

*Fig. 3*

*Fig. 4*

*Fig. 5*

**EP 3 974 651 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3663580 A1
- DE 102012009136 A1